# EUROPEAN PATENT SPECIFICATION

(11) **EP 4 461 505 B1**
(45) Date of publication and mention of the grant of the patent: **25.11.2026**
(21) Application number: 24171379.1
(22) Date of filing: 19.04.2024
(51) Int. Cl.: B29C 45/14

(54) **METHOD FOR PREPARING METAL-POLYMER RESIN COMPOSITE**
VERFAHREN ZUR HERSTELLUNG EINES METALL-POLYMER-HARZ-VERBUNDSTOFFS
PROCÉDÉ DE PRÉPARATION D'UN COMPOSITE MÉTAL-RÉSINE POLYMÈRE

(30) Priority: 10.05.2023 KR 20230060626
(43) Date of publication of application: 13.11.2024
(73) Proprietor: Plastal Co., Ltd., Ansan-si Gyeonggi-do 15429 (KR)
(72) Inventor: SUNG, Mu Chang, 15429 Ansan-si, Gyeonggi-do (KR); NAM, Seok Hyun, 15429 Ansan-si, Gyeonggi-do (KR); HONG, Sung Ho, 15429 Ansan-si, Gyeonggi-do (KR)
(74) Representative: Cabinet Beau de Loménie

(56) References cited:
- KR-B1- 102 388 883
- KR-B1- 102 470 590

## Description

### CROSS-REFERENCE TO RELATED APPLICATION

### TECHNICAL FIELD

The present disclosure relates to a method for preparing a metal-polymer resin composite with excellent bonding strength and bonding uniformity.

### BACKGROUND

A metal-resin composite is made by bonding or coating a polymer resin to a metal member to make it waterproof, and is widely used in an electronic device, an automobile part, and the like.

The metal-resin composite is typically prepared by washing, cleansing, and degreasing the metal, then etching the metal, then going through an electrolysis process again to form micropores in the metal and in an oxide film on a surface thereof, and then bonding the polymer resin to the metal via injection-molding or the like.

In the existing U.S. Patent Application Publication No. 2016-160371A1, presented is a method for preparing an aluminum-resin composite via degreasing aluminum at a relatively high temperature with a degreasing solution containing sodium carbonate or the like, then the etching it in an alkaline aqueous solution containing 30 to 60wt% of sodium hydroxide, then forming micropores using an acidic aqueous solution containing phosphoric acid, sulfuric acid, oxalic acid, and citric acid as an electrolyte solution, and then the injection-molding.

In Korean Patent No. 1606567, presented is a method for preparing an aluminum-resin composite having a bonding strength equal to or greater than 38Mpa by performing the etching process in two stages in an acidic aqueous solution containing hydrochloric acid and an acidic aqueous solution with an acid concentration in a range from 10 to 80% by weight, then performing electrolyzing with a diazole-based derivative compound, and then performing the injection-molding. In addition, in Korean Patent No. 2148308, presented is a method for preparing an aluminum-resin composite by performing the electrolyzing using an aluminum alloy metal material as an anode, in an acidic solution, and at a current density in a range from 0.1 to 2.0A/dm2 and then performing the electrolyzing again in an aqueous solution containing a triazine thiol derivative. However, such existing technologies are all limited to the aluminum alloys.

Because copper or a copper alloy has excellent electrical conductivity and thermal conductivity, the copper or the copper alloy is widely used in electrical and electronic parts as a rolled material, a wrought material, a foil material, and a plating material, and an electronic circuit board (a printed wiring board) that combines a copper wiring as an indispensable wiring material with an insulating layer mainly made of resin is used in the electronic device.
electronic device.

There is a need to increase a bonding strength between the resin material and the copper wiring, and various technologies have been proposed. For example, to improve adhesion and bonding strength between the resin film and the copper foil, a method (an anchor effect) of roughening a surface of the copper foil and then attaching an adhesive or a heated resin surface to irregularities of the roughened surface is used. However, in a case of a highfrequency signal, because the signal flows through a surface layer of the wiring because of an effect called a skin effect, when the surface of the copper foil has the irregularities, a transmission distance becomes greater and thus a transmission loss increases. For this reason, in terms of the transmission loss, which is an important characteristic of the electronic circuit board, smoothness of the surface of the copper foil is required to be high to achieve low transmission loss. Therefore, there is a need for a method to bond the copper foil with a smooth surface to the resin material with a great strength.

### [Prior art literature]

### [Patent Document]

(Patent Document 1) U.S. Patent Application Publication No. 2016-160371A1
(Patent Document 2) Korean Patent No. 1606567
(Patent Document 3) Korean Patent No. 2148308
(Patent Document 4) Korean Patent KR102470590
(Patent Document 5) Korean Patent KR102388883

### SUMMARY

The present disclosure has been made to solve the above-mentioned problems occurring in the prior art while advantages achieved by the prior art are maintained intact.

An aspect of the present disclosure provides a method for preparing a metal-polymer resin composite that directly bonds a polymer resin onto a metal member, but secures sufficient bonding strength and bonding uniformity.

The technical problems to be solved by the present disclosure are not limited to the aforementioned problems, and any other technical problems not mentioned herein will be clearly understood from the following description by those skilled in the art to which the present disclosure pertains.

To solve the above problem, the present disclosure provides a method for preparing a metal-polymer resin composite.
(1) According to an aspect of the present disclosure, a method for preparing a metal-polymer resin composite includes a pretreatment step (S1) of etching a metal member, which is one or more selected from a group consisting of copper, a copper clad, and a copper alloy an electrolysis process step (S2) of forming an adhesive coating layer on a surface of the pretreated metal member, a drying step (S3) of drying the metal member with the adhesive coating layer formed on the surface, and an injection-molding process step (S4) of bonding a polymer resin to the dried metal member, and the electrolysis process is performed in an electrolyte solution containing a sulfur-containing compound and a metal chelate compound. Characterized in that the injection-molding process step (S4) is performed by preheating the metal member to an injection-molding temperature and then directly injection-molding the polymer resin onto the preheated metal member, wherein the metal chelate compound may be one or more selected from a group consisting of copper ethylenediaminetetraacetate (EDTA-Cu), disodium copper ethylenediaminetetraacetate (EDTA-2NaCu), and diammonium copper ethylenediaminetetraacetate (EDTA-Cu (NH4)2).
(2) According to (1), the electrolyte solution may be prepared by adding and mixing the sulfur-containing compound and the metal chelate compound to and with distilled water.
(3) According to (1) or (2), the electrolyte solution may be prepared by mixing 5g to 500g of the sulfur-containing compound and 1g to 100g of the metal chelate compound for each 1L of distilled water.
(4) According to one of (1) to (3), the sulfur-containing compound may be one or more selected from sulfuric acid, ammonium sulfate, and sodium sulfate.
(5) According to one of (1) to (4), the electrolyte solution further may contain one or more copper organic compounds selected from a group consisting of cupric chloride, copper (II) trifluoroacetate hydrate, cupric hydroxide, cupric carbonate, and copper oxide.
(6) According to one of (1) to (5), the electrolysis process (S2) may be performed by immersing the metal member in the electrolyte solution and performing electrolysis at a temperature in a range from 15°C to 80°C for 60 seconds to 3600 seconds at a constant voltage in a range from 0.1V to 50V.
(7) According to one of (1) to (6), the pretreatment step (S1) may be performed by sequentially performing a degreasing process step (S1-1), an etching process step (S1-2), and a desmut step (S1-3).
(8) According to (8), the etching process step (S1-2) may be performed by immersing the metal member in an etching solution at a temperature in a range from 15°C to 80°C for 30 seconds to 300 seconds.
(9) According to (6), the etching solution may be a mixed solution of 5g to 500g of strong acid and 5g to 200g of hydrogen peroxide for each 1L of distilled water.
(10) According to (9), the desmut step (S1-3) may be performed via immersing the metal material in an alkaline aqueous solution; or via immersing the metal material in the alkaline aqueous solution and performing an ultrasonic treatment, and the immersing may be performed at a temperature in a range from 15°C to 80°C for 30 seconds to 300 seconds.
(11) According to (10), the alkaline aqueous solution may be a mixed solution of 5g to 200g of at least one selected from alkali metal hydroxide and alkaline earth metal hydroxide for each 1L of distilled water.
(12) According to one of (1) to (11), the metal member may be washed with hot water before the drying in the drying step (S3).
(13) According to (12), the hot water washing may be performed using distilled water at a temperature in a range from 15°C to 100°C.
(14) According to one of (1) to (13), the injection-molding process step (S4) may be performed by preheating the metal member to an injection-molding temperature and then directly injection-molding the polymer resin onto the preheated metal member.
(15) According to one of (1) to (14), the metal member may be one or more selected from a group consisting of copper, a copper clad, and a copper alloy.
(16) According to one of (1) to (15), the polymer resin may be one or more selected from a group consisting of polybutylene terephthalate, polyphenylene sulfide, polyphthalamide, polyethylene terephthalate, polycarbonate, polypropylene, polyimide, polyethylene, liquid crystal polymer, polyether ether ketone,

### DETAILED DESCRIPTION

Hereinafter, to facilitate understanding of the present disclosure, the present disclosure will be described in more detail.

Terms or words used in the description and claims of the present disclosure should not be construed as limited to their usual or dictionary meanings, and should be interpreted with meanings and concepts consistent with the technical idea of the present disclosure, based on the principle that the inventor is able to appropriately define the concept of the term to describe the invention thereof in the best way.

The present disclosure provides a method for preparing a metal-polymer resin composite that may provide a metal-polymer resin composite with excellent bonding strength and bonding uniformity (airtightness).

The method for preparing the metal-polymer resin composite according to an embodiment of the present disclosure includes a pretreatment step (S1) of etching a metal member; an electrolysis process step (S2) of forming an adhesive coating layer on a surface of the pretreated metal member; a drying step (S3) of drying the metal member with the adhesive coating layer formed on the surface thereof; and an injection-molding process step (S4) of bonding a polymer resin to the dried metal member, and the electrolysis process is performed in an electrolyte solution containing a sulfur-containing compound and a metal chelate compound.

In the past, a metal die casting and an injection-molded product were prepared separately and then bonded together using a double-sided tape, a bond, and the like, so that a thickness increased by the tape and/or the bond, a curing time was long, and a bonding strength (a tensile strength) was poor because a tolerance occurred by bonding the different materials.

However, the method for preparing the metal-polymer resin composite according to the present disclosure may prepare a composite that is a metal-polymer resin conjugate by going through the pretreatment step, the electrolysis process step, and a water washing and drying step to form the adhesive coating layer on the surface of the metal member, and then injection-molding the polymer resin directly on the surface of the metal member, thereby solving the above-mentioned problems at once and providing the composite with the bonding strength.

Hereinafter, the method for preparing the metal-polymer resin composite according to an embodiment of the present disclosure will be described in more detail by being divided into the steps.

### Step (S1)

The step (S1) is the pretreatment step of etching the metal member to form micropores in the surface of the metal member.

In addition, the pretreatment step may further include a process of removing oil and impurities while forming the micropores in the surface of the metal member. Specifically, the pretreatment step may be performed by sequentially performing a degreasing process step (S1-1), an etching process step (S1-2), and a desmut step (S1-3).

In the method for preparing the metal-polymer resin composite of the present disclosure, the metal member may be applied without being particularly limited, but specifically, the metal member may be one or more selected from a group consisting of copper, a copper clad, and a copper alloy.

The degreasing process step (S1-1), as a process to remove the oil such that the surface of the metal member may be evenly etched, may be performed using a metal degreaser or via alcohol washing.

As another example, the degreasing process step may be performed by immersing the metal member in a degreasing solution containing one or more metal degreasers of sodium carbonate, sodium phosphate, sodium silicate, sodium bicarbonate, and sodium hexametaphosphate or immersing the metal member in alcohol, and an ultrasonic wave may be applied when necessary.

As a specific example, the degreasing process step may be performed by immersing the metal member in the alcohol and applying the ultrasonic wave, and may be performed at a temperature in a range from 20°C to 80°C for 30 to 300 seconds. In this regard, the alcohol may be methanol or ethanol.

The etching process step (S1-2), as a step for forming the micropores in the surface of the metal member, may be performed by immersing the metal member in an etching solution.

Specifically, the etching process may be performed by immersing the metal member in the etching solution at a temperature in a range from 15°C to 80°C for 30 seconds to 300 seconds.

In this regard, the etching solution may be an aqueous solution containing strong acid and hydrogen peroxide. Specifically, the etching solution may be a mixed solution of distilled water mixed with the strong acid and hydrogen peroxide.

More specifically, the etching solution may be a mixed solution in which 5g to 500g of the strong acid and 5g to 200g of hydrogen peroxide are mixed for each 1L of the distilled water, and the strong acid may be one or more selected from sulfuric acid, hydrochloric acid, and nitric acid.

The desmut step (S1-3), as a step for removing the impurities remaining after the etching, may be performed via immersing the metal material in an alkaline aqueous solution containing an alkali metal or an alkaline earth metal hydroxide, or via immersing the metal material in the alkaline aqueous solution and an ultrasonic treatment. In this regard, the immersion may be performed at a temperature in a range from 15°C to 80°C for 30 seconds to 300 seconds.

Smut is formed by various factors, but in a case of an alloy for the die casting, because an impurity content is very high, about 3 to 5% and thus there are many components that are insoluble in the etching solution, so that the smut is generated in a great quantity. Accordingly, there was a problem that, even after going through the desmut process using the aqueous solution containing the strong acid, the high adhesive strength and the airtightness of the metal-polymer resin conjugate are not secured as the smut in an amount equal to or greater than a certain amount remains. Therefore, the technology of preparing the metal-polymer resin composite that directly injection-molds the polymer resin on the metal member was not able to be used.

However, the preparing method according to an embodiment of the present disclosure solves the problem of the prior art by performing the desmut step via immersing the metal material in the alkaline aqueous solution, or immersing the metal material in the alkaline aqueous solution and performing the ultrasonic treatment, and then going through the electrolysis process and the hot water washing and drying processes, which will be described later.

In one example, in terms of more desirable smut removal efficiency, the alkaline aqueous solution may be a mixed solution in which 5 to 200g of at least one selected from alkali metal hydroxide and alkaline earth metal hydroxide is mixed with for each 1L of the distilled water, and the alkali metal hydroxide or the alkaline earth metal hydroxide may be sodium hydroxide, potassium hydroxide, magnesium hydroxide, or calcium hydroxide, and more specifically, include one or more selected from sodium hydroxide and potassium hydroxide.

Additionally, the ultrasonic treatment may involve applying the ultrasonic wave in a range from 15kHz to 70kHz for 1 to 5 minutes, and in this case, the smut removal may be easier.

### Step (S2)

The step (S2), as the electrolysis process step for forming the adhesive coating layer on the surface of the metal member, may be performed in the electrolyte solution containing the sulfur-containing compound and the metal chelate compound.

Specifically, the electrolysis process may be performed by immersing the metal member in the electrolyte solution and performing electrolysis at a temperature in a range from 15°C to 80°C for 60 seconds to 3600 seconds at a constant voltage in a range from 0.1V to 50V. More specifically, the electrolysis process may be performed by performing the electrolysis at a temperature in a range from 15°C to 70°C for 180 seconds to 2400 seconds at a constant voltage in a range from 0.1V to 10V and a current density in a range from 0.1A/dm² to 5A/dm². More specifically, the electrolysis process may be performed by performing the electrolysis at a temperature in a range from 20°C to 40°C for 600 seconds to 1200 seconds at a constant voltage in a range from 1V to 5V and a current density in a range from 1A/dm² to 2A/dm².

In addition, the electrolyte solution, as a result prepared by adding and mixing the sulfur-containing compound and the metal chelate compound to and with the distilled water, may be prepared by mixing 5g to 500g of the sulfur-containing compound and 1g to 100g of the metal chelate compound for each 1L of the distilled water.

The sulfur-containing compound may be one or more selected from sulfuric acid, ammonium sulfate, and sodium sulfate, and may specifically be sulfuric acid.

In addition, the metal chelate compound may be one or more selected from a group consisting of copper ethylenediaminetetraacetate (EDTA-Cu), disodium copper ethylenediaminetetraacetate (EDTA-2NaCu), and diammonium copper ethylenediaminetetraacetate (EDTA-Cu(NH₄)₂), and may specifically be disodium copper ethylenediaminetetraacetate (EDTA-2NaCu).

As another example, the electrolyte solution may further contain one or more copper organic compounds selected from a group consisting of cupric chloride, copper (II) trifluoroacetate hydrate, cupric hydroxide, cupric carbonate, and copper oxide.

Via such electrolysis process, while the pores with an average size of several tens of nm may be evenly distributed and formed in the surface of the metal member, the smut that blocks the pores or grows in a form of dendrite on the surface to weaken the strength of bonding with the polymer resin may be almost completely removed.

### Step (S3)

The step (S3), as a step for removing remaining solution and moisture, may be performed by drying the metal member on which the electrolysis process has been completed.

In addition, the step (S3) may involve washing the metal member with hot water before the drying, and in this case, the surface of the metal member may be stabilized.

The hot water washing may be performed using distilled water at a temperature in a range from 15°C to 100°C.

The drying may be performed via hot air drying at a temperature in a range from 15°C to 100°C for 300 seconds to 1800 seconds.

### Step (S4)

The step (S4), as the injection-molding process step for preparing the composite by bonding the polymer resin to the surface of the metal member, may be performed by directly injection-molding the polymer resin onto the metal member with an injection-molding machine.

Specifically, the injection-molding process step (S4) may be performed by preheating the metal member to an injection-molding temperature and then directly injection-molding the polymer resin onto the preheated metal member. In this regard, the preheating may be performed by applying heat of 80°C to 300°C to the metal member for 1 to 300 minutes using a hot plate, a hot air blower, or the like.

In the method for preparing the metal-polymer resin composite of the present disclosure, the polymer resin may be applied without being particularly limited, but specifically, the polymer resin may be one or more selected from a group consisting of polybutylene terephthalate (PBT), polyphenylene sulfide (PSS), polyphthalamide (PPA), polyethylene terephthalate (PET), polycarbonate (PC), polypropylene (PP), polyimide (PI), polyethylene (PE), liquid crystal polymer (LCP), polyether ether ketone (PEEK), polyaryl ether ketone (PAEK), polyamide (PA), polyamide6 (PA6), and polyamide66 (PA66).

The liquid crystal polymer (LCP) is a crystalline polymer, and thus, a bonding surface tends to break when the liquid crystal polymer (LCP) is combined with the metal. Further, polyethylene (PE) or polypropylene (PP) is relatively soft compared to other polymers such as polyphenylene sulfide (PPS) and thus is easily deformed by a tensile force or a stress, so that polyethylene (PE) or polypropylene (PP) tends to be relatively easily deviated from the nano-sized pores into which it has penetrated, resulting in a relatively weak bonding strength. Therefore, in a case of such polymer resin, even when it is prepared according to the present disclosure, the bonding strength is only 20MPa or greater. A polymer resin with a melting point equal to or lower than about 200°C, such as polyethylene and polypropylene, or a crystalline polymer resin, such as the liquid crystal polymer, usually behaves as above. On the other hand, in a case of the polymers such as polybutylene terephthalate (PBT), polyphenylene sulfide (PSS), polyphthalamide (PPA), polyethylene terephthalate (PET), polycarbonate (PC), polyether ether ketone (PEEK), polyaryl ether ketone (PAEK), polyamide (PA), polyamide6 (PA6), and polyamide66 (PA66), when the polymer resin penetrates into the nanopores and is cured via the injection-molding, the polymer resin is not easily deviated even when a strong tensile force is applied, and thus, has a very high bonding strength equal to or greater than 30MPa. A polymer resin with a melting point equal to or higher than 200°C usually behaves as above.

### Examples

Hereinafter, the present disclosure will be described in more detail via present examples. However, following present examples are intended to illustrate the present disclosure and do not limit the scope of the present disclosure.

### Example 1

Twenty specimens were prepared by processing a 3mm-thick copper metal member (C1100) into a size of 40×12×3mm. An additional hole of 4mm in size was machined into each of the previously prepared specimens such that each specimen is able to be mounted on a rack during bonding. The specimens were mounted on the rack using the machined holes. The rack on which the prepared specimens are mounted was put into alcohol and then ultrasonic degreasing was performed for 60 seconds to remove oil and impurities from surfaces of the specimens. The specimens washed above were etched by being put in a mixture of sulfuric acid (20% by weight) and hydrogen peroxide (20% by weight) in distilled water (50°C) in a bubble stirrer for 5 minutes, then immersed in a desmut solution (sodium hydroxide 5% aqueous solution), and then ultrasonic-cleaned to remove impurities and smut. The washed specimens were put into an electrolyte solution, a mixture of sulfuric acid (10% by weight) and EDTA-2NaCu (3% by weight) in distilled water (60°C) and electrolyzed at a constant voltage of 5V for 1200 seconds to form a coating layer. Thereafter, the specimens were hot water-washed with distilled water at 80°C and then dried with a hot air dryer at 120°C for 1200 seconds.

Thereafter, copper-resin composites were prepared by injection-molding polyphenylene sulfide (PPS, SABIC) onto the 20 specimens. As an injection-molding machine, a 15-ton injection-molding machine from Daekyung Hydraulics Co. was used, and the injection-molding was performed by setting an injection-molding temperature to 170°C, a nozzle temperature to 300°C, an injection-molding pressure to 70 bar, and a hold pressure to 5 seconds. In this regard, the specimens were preheated such that a temperature of the specimens before the injection-molding becomes similar to the injection-molding temperature. Of a total of the 20 specimens, 10 were used for a tensile strength test and the remaining 10 were used for an airtightness test.

### Example 2

A copper-resin composite was prepared in the same manner as Example 1, except that the hot water washing was not performed as in Present Example 1.

### Example 3

A copper-resin composite was prepared in the same manner as Example 1, except that the specimen preheating before the injection-molding was not performed.

### Comparative Example 1

A copper-resin composite was prepared in the same manner as Example 1, except that a mixture of sulfuric acid (10% by weight) in distilled water (60°C) was used as the electrolyte solution during the electrolysis process in Example 1.

### Comparative Example 2

A copper-resin composite was prepared in the same manner as Example 1, except that the etching process was not performed in Example 1.

### Comparative Example 3

A copper-resin composite was prepared in the same manner as Example 1, except that the electrolysis process was not performed in Example 1.

### Experimental Example

Bonding strengths (tensile strengths) and airtightness of the copper-resin composites prepared in Present Examples and Comparative Examples were subjected to comparative analysis, and results are shown in Table 1 below.

### (1) Bonding strength (tensile strength)

Using a tensile tester (UTM, Time Group), the tensile strengths at a time point when copper and resin are separated from each other were measured via pulling at a speed of 5mm/min. The same experiment was repeated 10 times and the results are expressed as average values.

### (2) Airtightness

To identify the bonding uniformity, amounts of helium leakage at an interface were measured using a helium leakage test equipment (Canon ANELVA). When the helium leakage amount is equal to or smaller than 10⁻⁸Pa.m³/s, the bonding uniformity is marked as good, and when the helium leakage amount exceeds 10⁻⁸Pa.m³/s, the bonding uniformity is marked as bad. As for the airtightness test, the same experiment was also repeated on the 10 specimens to identify the number of defects.

**[Table 1]**

| Division | Tensile strength (MPa) | Airtightness (units) | |
|---|---|---|---|
| | | Pass | Fail |
| Example 1 | 46.04 | 10 | 0 |
| Example 2 | 43.22 | 8 | 2 |
| Example 3 | 43.67 | 6 | 4 |
| Comparative Example 1 | 41.31 | 2 | 8 |
| Comparative Example 2 | 39.39 | 5 | 5 |
| Comparative Example 3 | 25.36 | 0 | 10 |

As shown in Table 1, it was identified that the copper-resin composites of Example 1 to Example 3 were superior to Comparative Example 1 to Comparative Example 3 in both the bonding strength and the airtightness. It was identified that, in the case of the copper-resin composite of Comparative Example 1 prepared in the same manner as Example 1 except that the electrolyte solution that does not contain the metal chelate compound was used during the electrolysis process, and the copper-resin composite of Comparative Example 2 prepared in the same manner as Example 1 except that the etching process was not performed, the tensile strengths were significantly reduced to 90% and 85% and the airtightness was also significantly reduced, compared to Present Example 1.

In addition, it was identified that, in a case of Comparative Example 3, both the tensile strength and the airtightness were poor, with the tensile strength being half that of Example 1 and a passing rate for the airtightness being 0%. In this regard, Comparative Example 3 was prepared under the same conditions as Example 1, except that the electrolysis process was not performed.

Accordingly, it was identified that the method for preparing the metal-polymer resin composite including the pretreatment step, the electrolysis process step, the drying step, and the injection-molding process step is effective in preparing the metal-resin conjugate with the excellent bonding strength and bonding uniformity.

On the other hand, Example 2 and Example 3 showed tensile strength and airtightness decreased by about 6% and 5% compared to those of Example 1. In this regard, Example 2 and Example 3 were subjected to the same other processes as Example 1, but were not subjected to the hot water washing before the drying (Example 2) or were not subjected to the specimen preheating during the injection-molding process (Example 3).

With the above results, it was identified that, in terms of obtaining the metal-polymer resin composite with more excellent bonding strength and bonding uniformity, it may be advantageous to further include the hot water washing and metal member preheating steps in the method for preparing the metal-polymer resin composite of the present disclosure.

The method for preparing the metal-polymer resin composite according to the present disclosure may prepare the metal-polymer resin composite with the excellent bonding strength and bonding uniformity (airtightness).

## Claims

1. A method for preparing a metal-polymer resin composite, the method comprising:
a pretreatment step (S1) of etching a metal member, which is one or more selected from a group consisting of copper, a copper clad, and a copper alloy;
an electrolysis process step (S2) of forming an adhesive coating layer on a surface of the pretreated metal member;
a drying step (S3) of drying the metal member with the adhesive coating layer formed on the surface; and
an injection-molding process step (S4) of bonding a polymer resin to the dried metal member,
wherein the electrolysis process is performed in an electrolyte solution containing a sulfur-containing compound and a metal chelate compound,
**characterized in that** the injection-molding process step (S4) is performed by preheating the metal member to an injection-molding temperature and then directly injection-molding the polymer resin onto the preheated metal member,
wherein the metal chelate compound is one or more selected from a group consisting of copper ethylenediaminetetraacetate (EDTA-Cu), disodium copper ethylenediaminetetraacetate (EDTA-2NaCu), and diammonium copper ethylenediaminetetraacetate (EDTA-Cu(NH₄)₂).

2. The method of claim 1, wherein the electrolyte solution is prepared by adding and mixing the sulfur-containing compound and the metal chelate compound to and with distilled water.

3. The method of claim 1, wherein the electrolyte solution is prepared by mixing 5g to 500g of the sulfur-containing compound and 1g to 100g of the metal chelate compound for each 1L of distilled water.

4. The method of any of claims 1 to 3, wherein the sulfur-containing compound is one or more selected from sulfuric acid, ammonium sulfate, and sodium sulfate.

5. The method of any of claims 1 to 4, wherein the electrolyte solution further contains one or more copper organic compounds selected from a group consisting of cupric chloride, copper (II) trifluoroacetate hydrate, cupric hydroxide, cupric carbonate, and copper oxide.

6. The method of any of claims 1 to 5, wherein the electrolysis process (S2) is performed by immersing the metal member **in** the electrolyte solution and performing electrolysis at a temperature **in** a range from 15°C to 80°C for 60 seconds to 3600 seconds at a constant voltage **in** a range from 0.1V to 50V.

7. The method of any of claims 1 to 6, wherein the pretreatment step (S1) is performed by sequentially performing a degreasing process step (S1-1), an etching process step (S1-2), and a desmut step (S1-3).

8. The method of claim 7, wherein the etching process step (S1-2) is performed by immersing the metal member **in** an etching solution at a temperature **in** a range from 15°C to 80°C for 30 seconds to 300 seconds.

9. The method of claim 8, wherein the etching solution is a mixed solution of 5g to 500g of strong acid and 5g to 200g of hydrogen peroxide for each 1L of distilled water.

10. The method of any of claims 7 to 9, wherein the desmut step (S1-3) is performed via immersing the metal material in an alkaline aqueous solution; or via immersing the metal material in the alkaline aqueous solution and performing an ultrasonic treatment,
wherein the immersing is performed at a temperature in a range from 15°C to 80°C for 30 seconds to 300 seconds.

11. The method of claim 10, wherein the alkaline aqueous solution is a mixed solution of 5g to 200g of at least one selected from alkali metal hydroxide and alkaline earth metal hydroxide for each 1L of distilled water.

12. The method of any of claims 1 to 11, wherein the metal member is washed with hot water before the drying in the drying step (S3).

13. The method of claim 12, wherein the hot water washing is performed using distilled water at a temperature in a range from 15°C to 100°C.

14. The method of any of claims 1 to 13, wherein the polymer resin is one or more selected from a group consisting of polybutylene terephthalate, polyphenylene sulfide, polyphthalamide, polyethylene terephthalate, polycarbonate, polypropylene, polyimide, polyethylene, liquid crystal polymer, polyether ether ketone, polyaryl ether ketone, polyamide, polyamide6, and polyamide66.

## Patentansprüche

1. Verfahren zum Herstellen eines Metall-Polymerharz-Verbundstoffs, das Verfahren umfassend:
einen Vorbehandlungsschritt (S1) zum Ätzen eines Metallelements, das eines oder mehrere ist, die ausgewählt sind aus einer Gruppe, bestehend aus Kupfer, einer Kupferplattierung und einer Kupferlegierung;
einen Elektrolyseverfahrensschritt (S2) zum Bilden einer Haftbeschichtungsschicht auf einer Oberfläche des vorbehandelten Metallelements;
einen Trocknungsschritt (S3) zum Trocknen des Metallelements mit der auf der Oberfläche gebildeten Haftbeschichtungsschicht; und
einen Spritzgießverfahrensschritt (S4) zum Verbinden eines Polymerharzes mit dem getrockneten Metallelement,
wobei das Elektrolyseverfahren in einer Elektrolytlösung durchgeführt wird, die eine schwefelhaltige Verbindung und eine Metallchelatverbindung enthält,
**dadurch gekennzeichnet, dass** der Spritzgießverfahrensschritt (S4) durchgeführt wird, indem das Metallelement auf eine Spritzgießtemperatur vorgewärmt und das Polymerharz dann direkt auf das vorgewärmte Metallelement spritzgegossen wird,
wobei die Metallchelatverbindung eine oder mehrere ist, die ausgewählt sind aus einer Gruppe, bestehend aus Kupferethylendiamintetraacetat (EDTA-Cu), Dinatriumkupferethylendiamintetraacetat (EDTA-2NaCu) und Diammoniumkupferethylendiamintetraacetat (EDTA-Cu (NH₄)₂).

2. Verfahren nach Anspruch 1, wobei die Elektrolytlösung durch Hinzufügen und Mischen der schwefelhaltigen Verbindung und der Metallchelatverbindung zu und mit destilliertem Wasser hergestellt wird.

3. Verfahren nach Anspruch 1, wobei die Elektrolytlösung durch Mischen von 5 g bis 500 g der schwefelhaltigen Verbindung und 1 g bis 100 g der Metallchelatverbindung für jeweils 1 l destilliertes Wasser hergestellt wird.

4. Verfahren nach einem der Ansprüche 1 bis 3, wobei die schwefelhaltige Verbindung eine oder mehrere ist, die ausgewählt sind aus Schwefelsäure, Ammoniumsulfat und Natriumsulfat.

5. Verfahren nach einem der Ansprüche 1 bis 4, wobei die Elektrolytlösung ferner eine oder mehrere organische Kupferverbindungen enthält, die ausgewählt sind aus einer Gruppe, bestehend aus Kupfer(II)-chlorid, Kupfer(II)-trifluoracetathydrat, Kupfer(II)-hydroxid, Kupfer(II)-carbonat und Kupferoxid.

6. Verfahren nach einem der Ansprüche 1 bis 5, wobei das Elektrolyseverfahren (S2) durchgeführt wird, indem das Metallelement in die Elektrolytlösung eingetaucht wird und Elektrolyse bei einer Temperatur in einem Bereich von 15 °C bis 80 °C über 60 Sekunden bis 3600 Sekunden bei einer konstanten Spannung in einem Bereich von 0,1 V bis 50 V durchgeführt wird.

7. Verfahren nach einem der Ansprüche 1 bis 6, wobei der Vorbehandlungsschritt (S1) durch aufeinanderfolgendes Durchführen eines Entfettungsverfahrensschritts (S1-1), eines Ätzverfahrensschritts (S1-2) und eines Entschmutzungsschritts (S1-3) durchgeführt wird.

8. Verfahren nach Anspruch 7, wobei der Ätzverfahrensschritt (S1-2) durchgeführt wird, indem das Metallelement bei einer Temperatur in einem Bereich von 15 °C bis 80 °C über 30 Sekunden bis 300 Sekunden in eine Ätzlösung eingetaucht wird.

9. Verfahren nach Anspruch 8, wobei die Ätzlösung eine gemischte Lösung aus 5 g bis 500 g starker Säure und 5 g bis 200 g Wasserstoffperoxid für jeweils 1 l destilliertes Wasser ist.

10. Verfahren nach einem der Ansprüche 7 bis 9, wobei der Entschmutzungsschritt (S1-3) durch Eintauchen des Metallmaterials in eine alkalische wässrige Lösung; oder durch Eintauchen des Metallmaterials in die alkalische wässrige Lösung und Durchführen einer Ultraschallbehandlung durchgeführt wird,
wobei das Eintauchen bei einer Temperatur in einem Bereich von 15 °C bis 80 °C über 30 Sekunden bis 300 Sekunden durchgeführt wird.

11. Verfahren nach Anspruch 10, wobei die alkalische wässrige Lösung eine gemischte Lösung aus 5 g bis 200 g mindestens eines Stoffs, der ausgewählt ist aus Alkalimetallhydroxid und Erdalkalimetallhydroxid, für jeweils 1 l destilliertes Wasser ist.

12. Verfahren nach einem der Ansprüche 1 bis 11, wobei das Metallelement vor dem Trocknen in dem Trocknungsschritt (S3) mit heißem Wasser gewaschen wird.

13. Verfahren nach Anspruch 12, wobei das Waschen mit heißem Wasser unter Verwendung von destilliertem Wasser bei einer Temperatur in einem Bereich von 15 °C bis 100 °C durchgeführt wird.

14. Verfahren nach einem der Ansprüche 1 bis 13, wobei das Polymerharz eines oder mehrere ist, die ausgewählt sind aus einer Gruppe, bestehend aus Polybutylenterephthalat, Polyphenylensulfid, Polyphthalamid, Polyethylenterephthalat, Polycarbonat, Polypropylen, Polyimid, Polyethylen, Flüssigkristallpolymer, Polyetheretherketon, Polyaryletherketon, Polyamid, Polyamid 6 und Polyamid 66.

## Revendications

1. Procédé de préparation d'un composite métal-résine polymère, le procédé comprenant :
une étape de prétraitement (S1) dans laquelle un élément métallique, qui est un ou plusieurs choisis dans un groupe constitué du cuivre, du cuivre plaqué et d'un alliage de cuivre, est décapé ;
une étape de traitement par électrolyse (S2) dans laquelle une couche de revêtement adhésif est formée sur une surface de l'élément métallique prétraité ;
une étape de séchage (S3) dans laquelle l'élément métallique et la couche de revêtement adhésif formée sur la surface sont séchés ; et
une étape de traitement de moulage par injection (S4) dans laquelle une résine polymère est liée à l'élément métallique séché,
dans lequel le traitement par électrolyse est effectué dans une solution électrolytique contenant un composé contenant du soufre et un composé de chélate métallique,
**caractérisé en ce que** l'étape de traitement de moulage par injection (S4) est effectuée par préchauffage de l'élément métallique à une température de moulage par injection, puis par moulage par injection direct de la résine polymère sur l'élément métallique préchauffé,
dans lequel le composé de chélate métallique est un ou plusieurs composés choisis dans un groupe constitué de l'éthylènediaminetétraacétate de cuivre (EDTA-Cu), de l'éthylènediaminetétraacétate de cuivre disodique (EDTA-2NaCu) et de l'éthylènediaminetétraacétate de cuivre diammonique (EDTA-Cu (NH₄)₂).

2. Procédé selon la revendication 1, dans lequel la solution électrolytique est préparée par ajout et mélange du composé contenant du soufre et du composé de chélate métallique à et avec de l'eau distillée.

3. Procédé selon la revendication 1, dans lequel la solution électrolytique est préparée par mélange de 5 g à 500 g du composé contenant du soufre et de 1 g à 100 g du composé de chélate métallique pour chaque litre d'eau distillée.

4. Procédé selon l'une quelconque des revendications 1 à 3, dans lequel le composé contenant du soufre est un ou plusieurs composés choisis parmi l'acide sulfurique, le sulfate d'ammonium et le sulfate de sodium.

5. Procédé selon l'une quelconque des revendications 1 à 4, dans lequel la solution électrolytique contient en outre un ou plusieurs composés organiques de cuivre choisis dans un groupe constitué du chlorure cuivrique, du trifluoroacétate de cuivre (II) hydraté, de l'hydroxyde cuivrique, du carbonate cuivrique et de l'oxyde de cuivre.

6. Procédé selon l'une quelconque des revendications 1 à 5, dans lequel le traitement par électrolyse (S2) est effectué par immersion de l'élément métallique dans la solution électrolytique et réalisation d'une électrolyse à une température de 15°C à 80°C pendant 60 secondes à 3600 secondes, à une tension constante de 0,1 V à 50 V.

7. Procédé selon l'une quelconque des revendications 1 à 6, dans lequel l'étape de prétraitement (S1) est effectuée par réalisation successive d'une étape de traitement de dégraissage (S1-1), d'une étape de traitement de décapage (S1-2) et d'une d'étape de dérochage (S1-3).

8. Procédé selon la revendication 7, dans lequel l'étape de traitement de décapage (S1-2) est effectuée par immersion de l'élément métallique dans une solution de décapage à une température de 15°C à 80°C pendant 30 secondes à 300 secondes.

9. Procédé selon la revendication 8, dans lequel la solution de décapage est une solution mélangée contenant de 5 g à 500 g d'acide fort et de 5 g à 200 g de peroxyde d'hydrogène pour chaque litre d'eau distillée.

10. Procédé selon l'une quelconque des revendications 7 à 9, dans lequel l'étape de dérochage (S1-3) est effectuée par immersion du matériau métallique dans une solution aqueuse alcaline ; ou par immersion du matériau métallique dans la solution aqueuse alcaline et réalisation d'un traitement par ultrasons,
dans lequel l'immersion est effectuée à une température de 15°C à 80°C pendant 30 secondes à 300 secondes.

11. Procédé selon la revendication 10, dans lequel la solution aqueuse alcaline est une solution mélangée contenant de 5 g à 200 g d'au moins un hydroxyde choisi parmi un hydroxyde de métal alcalin et un hydroxyde de métal alcalino-terreux pour chaque litre d'eau distillée.

12. Procédé selon l'une quelconque des revendications 1 à 11, dans lequel l'élément métallique est lavé à l'eau chaude avant le séchage lors de l'étape de séchage (S3).

13. Procédé selon la revendication 12, dans lequel le lavage à l'eau chaude est effectué à l'aide d'eau distillée à une température de 15°C à 100°C.

14. Procédé selon l'une quelconque des revendications 1 à 13, dans lequel la résine polymère est une ou plusieurs résines choisies dans un groupe constitué du poly(téréphtalate de butylène), du poly(sulfure de phénylène), du polyphtalamide, du poly(téréphtalate de éthylène), du polycarbonate, du polypropylène, du polyimide, du polyéthylène, d'un polymère à cristaux liquides, du polyétheréthercétone, du polyaryléthercétone, du polyamide, du polyamide 6 et du polyamide 66.
